# EUROPEAN PATENT APPLICATION

(11) **EP 3 480 674 A1**
(43) Date of publication of application: **08.05.2019**
(21) Application number: 17200477.2
(22) Date of filing: 07.11.2017
(51) Int. Cl.: G06F 1/16, G06F 1/20

(54) **COOLING SYSTEM FOR A MOBILE TERMINAL**

(71) Applicant: Vestel Elektronik Sanayi ve Ticaret A.S., 45030 Manisa (TR)
(72) Inventor: ÖZEL, Ahmet, 45030 Manisa (TR)
(74) Representative: Ascherl, Andreas

(57) **Abstract**

The present invention refers to a cooling system for a mobile terminal. The cooling system of the present invention makes use of the vibration motor of the mobile terminal for providing cooling to the mobile terminal as well as facilitating vibration of the mobile terminal. The vibration motor of the mobile terminal is coupled to a pump, wherein the pump is configured to pump a cooling fluid through a plurality of cooling tubes configured along the body of the mobile terminal. The vibration motor is selectively coupled with a vibration weight via a solenoid piston as and when the mobile terminal is required to be vibrated.

## Description

This invention refers to a cooling system for a mobile terminal according to claim 1.

### Background of the Invention

Smart devices like mobiles, laptop, tablets, and the like include a processor for the purpose of providing processing for the different applications and algorithms running within the smart devices. During usage of intensive applications, such as HD video playback or playing high-end games, the processor tends to warm up. This increase in temperature is undesired because it may cause the various components of the smart device to fail.

As prior art CN205566409 discloses a liquid cooling cell phone, including the casing, the casing internal surface is equipped with the heat transfer water pipe, and the casing bottom is equipped with the power that water tank, water pump and water -feeding pump provided power, heat transfer water pipe one end intercommunication water tank, the other end is connected with the water pump, and the suction inlet of water pump communicates the water tank. From this, through set up the heat transfer water pipe in the casing, through the hydrologic cycle in the water pump heat transfer water pipe, making the water in the heat transfer water pipe carry out the heat transfer with the cell -phone, can dispelling the heat to the cell -phone, it scalds to prevent that the cell -phone from sending out.

Further, prior atrt document WO2016188213 provides a water cooling device, a rear terminal cover having the water cooling device, and a mobile terminal having the rear terminal cover. A heat conduction portion absorbs heat generated by a heat source of a mobile terminal, and transfers the heat to a liquid storage chamber by means of a heat conduction tube. Under the action of a controller, water cooling liquid in the liquid storage chamber enters an exchange chamber through a liquid outlet, and then the water cooling liquid in the exchange chamber flows into a water cooler through a reflux inlet. The temperature of water cooling liquid entering an exchange chamber from a liquid outlet can be fully reduced, and then the temperature-reduced water cooling liquid flows into a water cooler from a reflux inlet, such that the temperature of the water cooling liquid in the water cooler is lower, thereby effectively improving the heat dissipation effect.

### Object of the Invention

It is therefore the object of the present invention to provide a cooling system for a mobile terminal, which uses the cooling in an efficient way.

### Description of the Invention

The aforementioned object is achieved by a cooling system for a mobile terminal according to claim 1. The invention makes use of the vibration motor of the mobile terminal to automatically provide the desired cooling as soon as the processor and the other components of the mobile terminal start to heat up.

The cooling system of the present disclosure utilizes the vibration motor of the mobile terminal for facilitating the cooling of the mobile terminal when the mobile terminal tends to get hot. In accordance with the present invention, the mobile terminal is at least one of a smartphone, a tablet, and a laptop. Typically, the mobile terminal includes a vibration motor that facilitates the vibration of the mobile terminal on reception of any kind of notification or providing a haptic feedback while playing games or other activities on the mobile terminal.

In accordance with the present invention, the cooling system for cooling the mobile terminal comprises the vibration motor, wherein the vibration motor is a part of the mobile terminal. The vibration motor facilitates the vibration of the mobile terminal on reception of any kind of notification or providing a haptic feedback while playing games or other activities on the mobile terminal. The vibration motor has a shaft extending therefrom. For achieving the vibration of the mobile terminal, the vibration motor is coupled to a vibrating weight, which vibrates on receiving the mechanical drive from the vibrating motor.

Further embodiments of the present invention are subject of the further subclaims and of the following description, referring to the drawings.

The cooling system further comprises a solenoid piston. The actuating element of the solenoid piston, i.e., piston, is mechanically coupled with the vibrating weight. As and when it is required for the mobile terminal to vibrate, the solenoid piston is activated, thereby displacing the vibrating weight to interface with the shaft of the vibrating motor and providing vibrations to the mobile terminal.

In accordance with the present invention, the cooling system further comprises a pump disposed operatively between the vibrating motor and the vibrating weight. In one embodiment, the pump is a vane pump. The shaft of the vibration motor is configured to be mechanically coupled to the pump. To engage with the vibration weight, the shaft of the vibration motor is configured to be passed through the pump and connect with the vibrating weight. The vibration motor provides a rotary drive to the pump, which is required by the pump for the pumping operation of the fluid to a plurality of cooling tubes configured along the body of the mobile terminal for facilitating the cooling of the heating components of the mobile terminal. In an embodiment, the fluid is water.

The pump comprises an inlet and an outlet. In an embodiment where the pump is a vane pump, the pump further comprises a plurality of vanes positioned operatively between an eye of the pump and a housing of the pump.The fluid enters the pump via the inlet, whereafter the fluid is pressurized via the vanes of the pump. The vanes of the pump receive the mechanical drive from the vibration motor. After the fluid is pressurized, the pressurized fluid exits the housing of the pump via the outlet. It is to be noted that the vibration motor and the pump are configured to operate together. That means, whenever the vibration motor is activated, the pump will be operational as well.

It is not necessary that when the vibrating motor is active, the mobile terminal is essentially in vibrating state. More specifically, in accordance with the present invention, the vibrating motor is used for performing two separate operations, viz., driving the pump as well as providing mechanical drive to the vibrating weight for vibrating the mobile terminal. The solenoid piston displacing the vibrating weight is only activated when the vibration is required by the mobile terminal. The activation of the solenoid piston displaces the vibrating weight towards the vibrating motor to interface/connect with the shaft of the vibrating motor. If it is desired that only cooling of the mobile terminal is required while vibration is not required, the solenoid piston is maintained in an inactive state, and the vibration motor is activated for providing mechanical drive to the pump.

The invention is just exemplarily described with respect to the attached figures in the following.

### Brief Description of the Drawings

- Fig. 1: illustrates a schematic view of a cooling system for a mobile terminal according to the present invention; and
- Fig. 2: a schematic view of a pump used in the cooling system of Fig. 1

### Detailed Description of the Drawings

Mobile terminals such as smartphones, tablets, and laptops tend to heat up when running highly intensive applications which need a lot of processing power. In case of laptops, this heating is negated by the use of cooling pads. The cooling pads are pads which are provided with fans. A meshed support panel is provided over the fans to support the laptop thereon. Cool air is blown towards the laptop placed on the support panel for facilitating the cooling of the laptop via the conventional forced heat transfer mechanisms. However, carrying these cooling pads everywhere is not convenient. In the case of smartphones, some cooling systems have been described in the background section of the present disclosure. However, these systems involve the use numerous components and may cause a rapid drain of the batteries of the mobile terminals.

In order to overcome the aforementioned drawbacks associated with the conventional cooling systems and mechanisms, the present invention envisages a cooling system which does not require any additional driving component to be fitted within the mobile terminal.

A mobile terminal, typically, includes a vibration motor and a vibration weight, which act in conjunction to provide vibrations to the mobile terminal. More specifically, the vibrating motor provides a mechanical drive to the vibrating weight for achieving the vibrations. The combined operation of the vibration motor and the vibration weight to provide vibration to the mobile terminal is present in almost all the kinds of mobile terminals. The present invention envisages the usage of the vibration motor for dual mode operation. More specifically, the present invention provides a mechanism to use the vibration motor of the mobile terminal for providing cooling to the mobile terminal as well as providing vibrations to the mobile terminal.

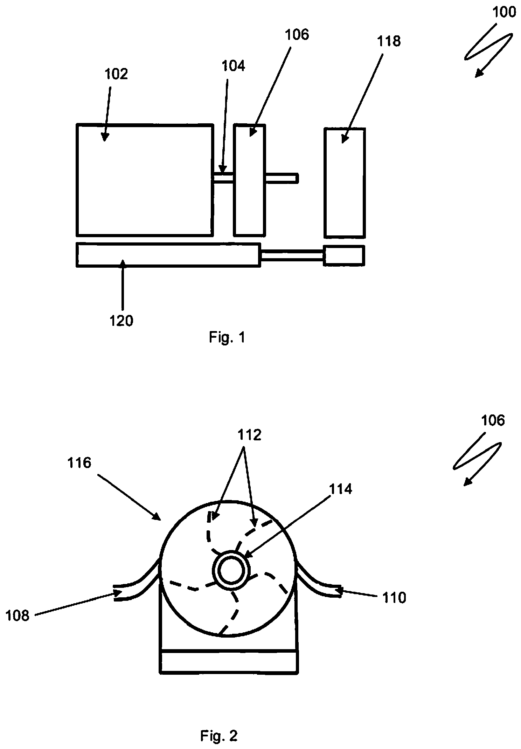

Fig. 1 illustrates a schematic view of a cooling system 100 for a mobile terminal. The cooling system 100 comprises a vibration motor 102 having a shaft 104 extending therefrom. The shaft 104 is the output shaft of the vibration motor 102, which provides the required mechanical rotary drive. The cooling system 100 further comprises a pump 106. The pump 106 is mechanically coupled with the vibration motor 102. More specifically, the shaft 104 of the vibrating motor 102 passes through the pump 106 and extends beyond the distal end surface of the pump 106. In such a configuration, the shaft 104 is rotatable coupled to the pump 104 for transmitting the rotary drive of the vibration motor 102 to the pump 106.

The pump 106 comprises an inlet 108 and an outlet 110. The inlet 110 is in fluid communication with a fluid source, while the outlet 110 is in fluid communication with the cooling tubes configured along the body of the mobile terminal for facilitating cooling of the heating components thereof. In an embodiment where the pump is a vane pump, the pump 106 further comprises a plurality of vanes 112 positioned operatively between an eye 114 of the pump and a housing 116 of the pump 106.The fluid enters the pump via the inlet 108, whereafter the fluid is pressurized via the vanes 112 of the pump 106. The vanes 112 of the pump 106 receive the mechanical drive from the vibration motor 102. After the fluid is pressurized, the pressurized fluid exits the housing 116 of the pump 106 via the outlet 110. It is to be noted that the vibration motor 102 and the pump 106 are configured to operate together. That means, whenever the vibration motor 102 is activated, the pump 106 will be operational as well.

The cooling system 100 further comprises a vibration weight 118. The vibration weight 118 is mounted on a solenoid piston 120, which facilitates the selective mechanical coupling of the vibration weight 118 with the vibration motor 102. The solenoid piston 120 is activated as and when the mobile terminal is required to be activated. On activation, the solenoid piston 120 displaces the vibration weight 118 towards the vibration motor 102 for coupling the shaft 104 of the vibration motor 102 with the vibration weight 118. The vibration motor 102 provides the mechanical drive to the vibration weight 118 for achieving the vibration of the mobile terminal.

It is to be noted that for the operation of the pump 106 and the vibration of the mobile terminal via the coupling of the vibration motor 102 and the vibration weight 118 can take place simultaneously, since the mobile terminal may need vibrations as well as cooling at the same time. However, in case only the pump 106 is required to operate for providing cooling to the heating components of the mobile terminal, the solenoid piston 120 is maintained in an inactive state while the vibration motor 102 actively provides mechanical drive to the pump 106. In the inactive state of the solenoid piston 120, the vibration weight 118 is spaced apart and decoupled from the shaft 104 of the vibration motor 108.

Thus, the present invention provides the cooling system for cooling the mobile terminal comprises the vibration motor, wherein the vibration motor is a part of the mobile terminal. The vibration motor facilitates the vibration of the mobile terminal on reception of any kind of notification or providing a haptic feedback while playing games or other activities on the mobile terminal. The vibration motor has a shaft extending therefrom. For achieving the vibration of the mobile terminal, the vibration motor is coupled to a vibrating weight, which vibrates on receiving the mechanical drive from the vibrating motor.

In particular, the cooling system of the present invention makes use of the vibration motor of the mobile terminal for providing cooling to the mobile terminal as well as facilitating vibration of the mobile terminal. The vibration motor of the mobile terminal is coupled to a pump, wherein the pump is configured to pump a cooling fluid through a plurality of cooling tubes configured along the body of the mobile terminal. The vibration motor is selectively coupled with a vibration weight via a solenoid piston as and when the mobile terminal is required to be vibrated.

### List of reference numbers

- 100: Cooling System
- 102: Vibration Motor
- 104: Shaft
- 106: Pump
- 108: Inlet
- 110: Outlet
- 112: Vanes
- 114: Eye
- 116: Housing
- 118: Vibration Weight
- 120: Solenoid Piston

## Claims

1. A cooling system (100) for a mobile terminal, said cooling system (100) comprising:
a vibration motor (102);
a shaft (104) extending from said vibration motor (104); and
a pump (106) coupled with said shaft (104) for receiving mechanical drive from said vibration motor (102), wherein said pump (106) is configured to pump a cooling fluid into a plurality of cooling tubes configured along a body of said mobile terminal for facilitating cooling of the heating components of said mobile terminals.

2. The cooling system (100) according to claim 1, wherein said mobile terminal is at least one of a smartphone, a tablet, and a laptop.

3. The cooling system (100) according to claim 1, further comprising a vibration weight (118) configured to be selectively coupled with said vibration motor (102) for providing vibrations to said mobile terminal.

4. The cooling system (100) according to claim 3, further comprising a solenoid piston (120), wherein said vibration weight (118) is mounted on a piston of said solenoid piston (120).

5. The cooling system (100) according to claim 4, wherein activation of said solenoid piston (120) causes displacement of said vibration weight (118) towards said shaft (104) of said vibration motor (102), wherein said vibration weight (118) is mechanically coupled with said vibration motor (102) for providing vibration to said mobile terminal.

6. The cooling system (100) according to claim 1, wherein said pump (106) is a vane pump.

7. The cooling system (100) according to claim 6, wherein said pump (106) comprises:
an inlet (108) in fluid communication with a fluid source; and
an outlet (110) in fluid communication with said cooling tubes.

8. The cooling system (100) according to claim 7, wherein said fluid is water.
